# EUROPEAN PATENT SPECIFICATION

(11) **EP 3 705 323 B1**
(45) Date of publication and mention of the grant of the patent: **11.01.2023**
(21) Application number: 18874781.0
(22) Date of filing: 01.11.2018
(51) Int. Cl.: B60H 1/00, B60H 1/32, F25B 6/02

(54) **ENHANCED VAPOR INJECTION HEAT PUMP AIR CONDITIONING SYSTEM AND ELECTRIC VEHICLE COMPRISING HEAT PUMP AIR CONDITIONING SYSTEM**
WÄRMEPUMPEN-KLIMAANLAGE MIT VERBESSERTER DAMPFINJEKTION UND ELEKTROFAHRZEUG MIT WÄRMEPUMPEN-KLIMAANLAGE
SYSTÈME AMÉLIORÉ DE CLIMATISATION À POMPE À CHALEUR À INJECTION DE VAPEUR ET VÉHICULE ÉLECTRIQUE ÉQUIPÉ D'UN SYSTÈME DE CLIMATISATION À POMPE À CHALEUR

(30) Priority: 01.11.2017 CN 201711057911
(43) Date of publication of application: 09.09.2020
(73) Proprietor: NIO (Anhui) Holding Co., Ltd., Hefei City, Anhui Province (CN)
(72) Inventor: ZHAO, Ruipo, Shanghai (CN); WEN, Baoping, Shanghai (CN); HAN, Fang, Shanghai (CN); WANG, Lei, Shanghai (CN); WANG, Xueshi, Shanghai (CN); GAO, Jie, Shanghai (CN); LI, Wei, Shanghai (CN)
(74) Representative: Vossius & Partner Patentanwälte Rechtsanwälte mbB
(86) International application number: PCT/CN2018/113257
(87) International publication number: WO 2019/085956

(56) References cited:
- CN-A- 1 840 988
- CN-A- 104 884 285
- CN-A- 105 758 061
- CN-A- 106 004 329
- CN-A- 107 187 291
- CN-A- 107 757 298
- CN-U- 207 859 887
- DE-A1-102011 118 162
- JP-A- 2001 041 601
- US-A1- 2014 075 972
- US-A1- 2016 236 539

## Description

### Technical Field

The invention belongs to the field of air-conditioning equipment, and particularly provides an enhanced vapor injection heat pump air-conditioning system and an electric vehicle comprising the heat pump air-conditioning system.

### Background Art

In an air-conditioning system of traditional automobiles, the heating of a passenger compartment uses the heat emitted during the cooling of an engine, and its water temperature is high and the warm air effect is good. The refrigeration of the passenger compartment uses a mechanical compressor to drive a refrigerant circuit to achieve a cooling effect through a pressure change and phase-change heat transfer.

The temperature of the coolant for a powertrain of a pure electric vehicle needs to be controlled at a relatively low temperature, which cannot provide a good heating effect for the passenger compartment. At present, electric heaters and traditional heat pumps are mostly used as heat sources for passenger compartment heating of pure electric vehicles. However, the high energy consumption of electric heating affects the range of electric vehicles. Moreover, the traditional heat pumps cannot operate below -10°C, in which case an electric heater needs to be turned on to heat the compartment, which not only consumes a lot of energy, but also affects the range of the vehicle at a low temperature.

Accordingly, there is a need in the art for a novel heat pump air-conditioning system to solve the above problem.

US 2014/075972 A1 relates to an air conditioning system for conditioning the air of a passenger space of a motor vehicle. The system includes a refrigerant circuit with a compressor, a first heat exchanger for the heat exchange between the refrigerant and the environment and a second heat exchanger for supplying heat from the refrigerant to the air supply to be conditioned for the passenger space. The refrigerant circuit further includes, in the flow direction of the refrigerant after the compressor, a valve arrangement. The valve arrangement comprises a branch, a first valve arranged between the branch and the second heat exchanger, and a second valve arranged between the branch and the first heat exchanger. The first valve is designed with a normally open valve characteristic and the second valve with a normally closed valve characteristic.

### Summary of the Invention

The invention for which protection is sought, is defined by the independent claim. The dependent claims concern particular embodiments.

In order to solve the above problem in the prior art, that is, to solve the problem that a heat pump in an existing heat pump air-conditioning system of an electric vehicle cannot operate below -10°C, the invention provides an enhanced vapor injection heat pump air-conditioning system comprising a heating circuit, the heating circuit comprising a compressor, a first condenser, a first heat exchanger, a first expansion valve and a second condenser which are connected end to end in sequence, wherein the first heat exchanger comprises a first channel and a second channel, a first end of the first channel is in communication with the first condenser, and a second end of the first channel is in communication with the first expansion valve; and a first end of the second channel is in communication with the first condenser through a second expansion valve, and a second end of the second channel is in communication with an inlet of the compressor.

In a preferred technical solution of the heat pump air-conditioning system described above, the heating circuit further comprises a first shutoff valve and a second shutoff valve, wherein the first shutoff valve is connected between an outlet of the compressor and the first condenser, and the second shutoff valve is connected between the inlet of the compressor and the second condenser.

In a preferred technical solution of the heat pump air-conditioning system described above, the heat pump air-conditioning system further comprises a refrigeration circuit, the refrigeration circuit comprising the compressor, the second condenser, a third expansion valve and an evaporator which are connected end to end in sequence.

In a preferred technical solution of the heat pump air-conditioning system described above, the refrigeration circuit further comprises the first heat exchanger; the first end of the first channel is in communication with the second condenser, and the second end of the first channel is in communication with the third expansion valve; and the first end of the second channel is in communication with the second condenser through the second expansion valve, and the second end of the second channel is in communication with the inlet of the compressor.

In a preferred technical solution of the heat pump air-conditioning system described above, the refrigeration circuit further comprises a third shutoff valve connected between an outlet of the compressor and the second condenser.

In a preferred technical solution of the heat pump air-conditioning system described above, the heat pump air-conditioning system further comprises a defogging circuit, the defogging circuit comprising the compressor, the first condenser, the third expansion valve and the evaporator which are connected end to end in sequence.

In a preferred technical solution of the heat pump air-conditioning system described above, the defogging circuit further comprises the first heat exchanger; the first end of the first channel is in communication with the first condenser, and the second end of the first channel is in communication with the third expansion valve; and the first end of the second channel is in communication with the first condenser through the second expansion valve, and the second end of the second channel is in communication with the inlet of the compressor.

In a preferred technical solution of the heat pump air-conditioning system described above, the heat pump air-conditioning system further comprises a defrosting circuit, the defrosting circuit comprising the compressor, the second condenser, a fourth expansion valve and a second heat exchanger which are connected end to end in sequence; the second heat exchanger comprising a third channel and a fourth channel, a first end of the third channel being in communication with the fourth expansion valve, and a second end of the third channel being in communication with the inlet of the compressor; and two ends of the fourth channel being respectively in communication with a heat source.

In a preferred technical solution of the heat pump air-conditioning system described above, the defrosting circuit further comprises the first heat exchanger; the first end of the first channel is in communication with the second condenser, and the second end of the first channel is in communication with the fourth expansion valve; and the first end of the second channel is in communication with the second condenser through the second expansion valve, and the second end of the second channel is in communication with the inlet of the compressor, wherein the second expansion valve is in a closed state.

In a preferred technical solution of the heat pump air-conditioning system described above, further comprising a first fan for providing airflow for the first condenser and/or the evaporator.

In a preferred technical solution of the heat pump air-conditioning system described above, the heat pump air-conditioning system further comprises a second fan for providing airflow for the second condenser.

In addition, the invention also provides an electric vehicle, which comprises an enhanced vapor injection heat pump air-conditioning system according to any one of the preferred technical solutions of the heat pump air-conditioning system described above.

In a preferred technical solution of the electric vehicle described above, the first fan blows the airflow to the interior of the vehicle.

In a preferred technical solution of the electric vehicle described above, the second fan blows the airflow out of the vehicle.

In a preferred technical solution of the electric vehicle described above, the heat source includes at least one of a battery and an electric motor.

Those skilled in the art can understand that in the preferred technical solution of the invention, by connecting the first heat exchanger in series in the heating circuit of the heat pump air-conditioning system, the heat pump air-conditioning system can lower the temperature of the coolant in the whole circuit during heating, so that the heat pump air-conditioning system can heat even below -10°C and provide hot air for the interior of the electric vehicle.

Specifically, the first heat exchanger comprises a first channel and a second channel. The heating circuit mainly consists of a compressor, a first condenser, the first channel of the first heat exchanger, a first expansion valve and a second condenser which are connected end to end in sequence. A first end of the second channel is in communication with the first condenser through a second expansion valve, and a second end of the second channel is in communication with the compressor.

When the heating circuit operates, the compressor compresses a low-temperature and low-pressure coolant into a high-temperature and high-pressure coolant. The high-temperature and high-pressure coolant transfers heat to the air in the interior of the vehicle when passing through the first condenser and thus becomes a low-temperature and high-pressure coolant. One part of the low-temperature and high-pressure coolant becomes a low-temperature and low-pressure coolant when passing through the first expansion valve after passing through the first channel. The low-temperature and low-pressure coolant absorbs heat from the air outside the vehicle when passing through the second condenser and thus becomes a high-temperature and low-pressure coolant. Finally, the high-temperature and low-pressure coolant becomes a high-temperature and high-pressure coolant again after passing through the compressor.

The other part of the low-temperature and high-pressure coolant vaporizes (or expands) and absorbs heat when passing through the second expansion valve and thus becomes a low-temperature and low-pressure coolant (the temperature of which is lower than that of the coolant in the first channel). The low-temperature and low-pressure coolant absorbs heat from the low-temperature and high-pressure coolant in the first channel when passing through the second channel, and then returns to the compressor. In this process, the temperature of the coolant in the first channel becomes lower, which in turn makes the temperature of the coolant flowing through the second condenser and the compressor also become lower, thus lowering the operating temperature of the compressor compared with the prior art. Therefore, even if the ambient temperature is lower than -10°C, the heating circuit will not disable the compressor due to too fast heating of the environment in the compartment.

Furthermore, in order to optimize the heating effect of the electric vehicle, the first condenser is further equipped with a first fan for blowing hot air around the first condenser into the compartment.

### Brief Description of the Drawings

Preferred embodiments of the invention will be described below with reference to the accompanying drawings, in which:
Fig. 1 is a schematic diagram of a heat pump air-conditioning system of the invention;
Fig. 2 is a diagram of a heating circuit of the heat pump air-conditioning system of the invention;
Fig. 3 is a diagram of a refrigeration circuit of the heat pump air-conditioning system of the invention;
Fig. 4 is a diagram of a defogging circuit of the heat pump air-conditioning system of the invention; and
Fig. 5 is a diagram of a defrosting circuit of the heat pump air-conditioning system of the invention.

### List of reference numerals:

1. Compressor; 2. first shutoff valve; 3. first condenser; 4. first check valve; 5. liquid storage and drying bottle; 6. first heat exchanger; 61. first channel; 62. second channel; 7. first expansion valve; 8. second expansion valve; 9. second condenser; 10. second shutoff valve; 11. gas-liquid separator; 12. third shutoff valve; 13. second check valve; 14. third expansion valve; 15. evaporator; 16. fourth expansion valve; 17. second heat exchanger; 171. third channel 171; 172. fourth channel; 18. battery; 19. first fan; 20. second fan; and 21. third check valve.

### Detailed Description of Embodiments

It should be understood by those skilled in the art that embodiments in this section are merely used to explain the technical principle of the invention and are not intended to limit the protection scope of the invention. For example, although the enhanced vapor injection heat pump air-conditioning system of the invention is described with an electric car as an example, the enhanced vapor injection heat pump air-conditioning system of the invention can also be applied to any other feasible electric vehicles, such as an electric bus, a high-speed train, and an underground train. Those skilled in the art can make adjustments as required so as to adapt to specific application scenarios, and the adjusted technical solutions will still fall within the scope of protection of the invention as defined in the appended claims.

It should be noted that the terms herein that indicate the direction or positional relationship, such as "center", "upper", "lower", "left", "right", "vertical", "horizontal", "inner" and "outer", are based on the direction or positional relationship shown in the figures, which is merely for ease of description and not to indicate or imply that the device or element must have a particular orientation and be constructed and operated in a particular orientation, and therefore, should not be construed as limiting the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

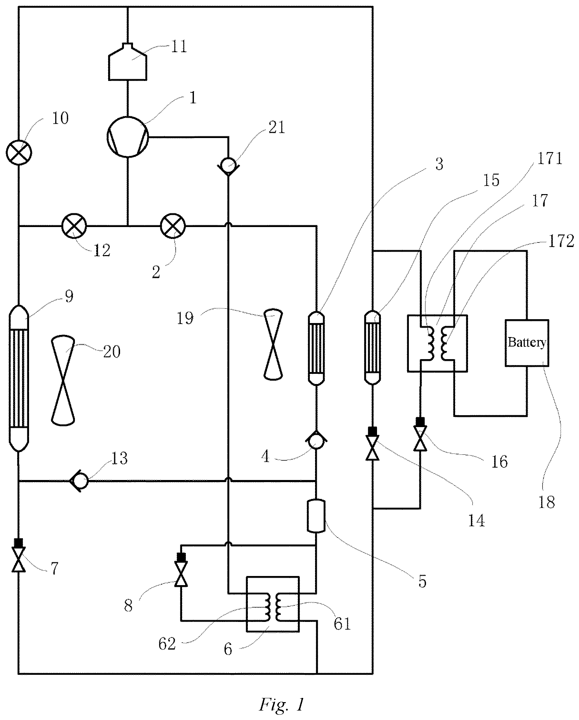

As shown in Fig. 1, an enhanced vapor injection heat pump air-conditioning system of the invention mainly comprises a compressor 1, a first condenser 3, a first heat exchanger 6, a second condenser 9, an evaporator 15 and a second heat exchanger 17. The first condenser 3 can provide heat for a compartment of an electric vehicle, the second condenser 9 can dissipate heat to or absorb heat from the ambient environment, and the evaporator 15 can absorb heat from the compartment of the electric vehicle. In order to increase the heat dissipation speed of the first condenser 3 and the second condenser 9 and increase the heat absorption speed of the evaporator 15, the heat pump air-conditioning system of the invention further comprises a first fan 19 and a second fan 20. The first fan 19 is used to blow hot air around the first condenser 3 and cold or hot air around the evaporator 15 to the compartment. The second fan 20 is used to blow away the hot air around the second condenser 9.

When the compressor 1, the first condenser 3, the first heat exchanger 6 and the second condenser 9 operate, the heat pump air-conditioning system of the invention can heat the compartment of the electric vehicle. When the compressor 1, the first heat exchanger 6, the second condenser 9 and the evaporator 15 operate, the heat pump air-conditioning system of the invention can refrigerate the compartment of the electric vehicle. When the compressor 1, the first condenser 3, the first heat exchanger 6 and the evaporator 15 operate, the heat pump air-conditioning system of the invention can defog the compartment of the electric vehicle. When the compressor 1, the second condenser 9 and the second heat exchanger 17 operate, the heat pump air-conditioning system of the invention can defrost the second condenser 9.

The enhanced vapor injection heat pump air-conditioning system comprises a heating circuit, a refrigeration circuit, a defogging circuit and a defrosting circuit, which are used for enabling the heat pump air-conditioning system to perform the four operation processes above, respectively.

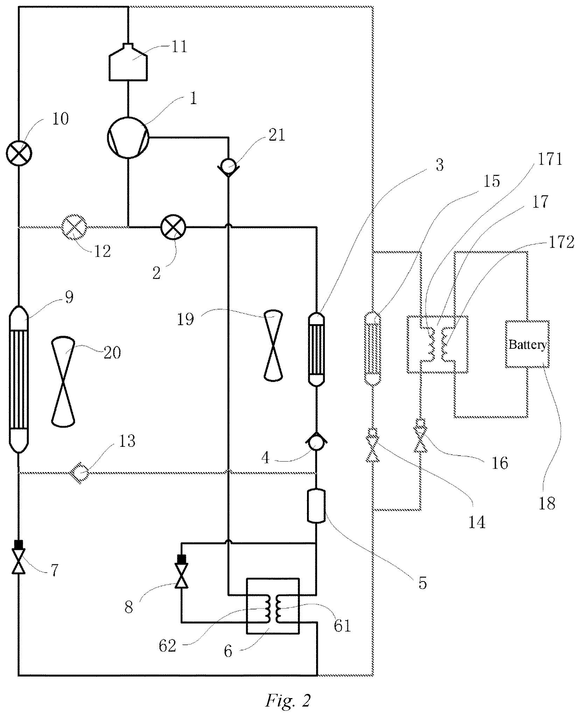

Fig. 2 shows the heating circuit of the heat pump air-conditioning system of the invention when heating the compartment of the electric vehicle.

As shown in Fig. 2, the heating circuit of the invention mainly comprises the compressor 1, the first condenser 3, the first heat exchanger 6, a first expansion valve 7 and the second condenser 9 which are connected end to end in sequence. The first heat exchanger 6 comprises a first channel 61 and a second channel 62. A first end of the first channel 61 (the upper end of the first channel 61 in Fig. 2) is in communication with the first condenser 3, and a second end of the first channel 61 (the lower end of the first channel 61 in Fig. 2) is in communication with the first expansion valve 7. A first end of the second channel 62 (the lower end of the second channel 62 in Fig. 2) is in communication with the first condenser 3 through the second expansion valve 8, and a second end of the second channel 62 (the upper end of the second channel 62 in Fig. 2) is in communication with the compressor 1.

With continued reference to Fig. 2, the compressor 1 comprises a first input end, a second input end, and an output end, wherein the first input end is in communication with the second condenser 9, the second input end is in communication with the second end of the second channel 62, and the output end is in communication with the first condenser 3.

The operating principle of the heating circuit shown in Fig. 2 is as follows:
Main circuit: The compressor 1 compresses a low-temperature and low-pressure coolant into a high-temperature and high-pressure coolant. The high-temperature and high-pressure coolant transfers heat to the air in the interior of the vehicle when passing through the first condenser 3 and thus becomes a low-temperature and high-pressure coolant. One part of the low-temperature and high-pressure coolant becomes a low-temperature and low-pressure coolant when passing through the first expansion valve 7 after passing through the first channel 61 of the first heat exchanger 6. The low-temperature and low-pressure coolant absorbs heat from the ambient air when passing through the second condenser 9 and thus becomes a high-temperature and low-pressure coolant. Finally, the high-temperature and low-pressure coolant becomes a high-temperature and high-pressure coolant again after passing through the compressor 1.

Enhanced vapor injection circuit: The other part of the low-temperature and high-pressure coolant flowing out of the first condenser 3 vaporizes (or expands) and absorbs heat when passing through the second expansion valve 8 and thus becomes a low-temperature and low-pressure coolant (the temperature of which is lower than that of the coolant in the first channel 61). The low-temperature and low-pressure coolant absorbs heat from the low-temperature and high-pressure coolant in the first channel 61 when passing through the second channel 62, and then returns to the compressor 1.

It should be noted that the high or low level of temperature of the coolant in the circuit is the temperature of the coolant in a current state compared to the temperature of the coolant in a previous state, for example, the temperature of the coolant after passing through the first condenser 3 and the temperature of the coolant before passing through the first condenser 3.

During this process, the hot air around the first condenser 3 can be continuously blown into the compartment by the first fan 19.

Those skilled in the art can understand that a lower coolant temperature in the first channel 61 can make the coolant temperature flowing through the second condenser 9 and the compressor 1 also lower. Therefore, the enhanced vapor injection circuit in the heat pump air-conditioning system of the invention can keep the operating temperature of the compressor 1 within a safe range. In particular, the phenomenon that the compressor 1 cannot be used because the heating circuit heats the environment in the compartment too fast when the ambient temperature is lower than -10°C is avoided.

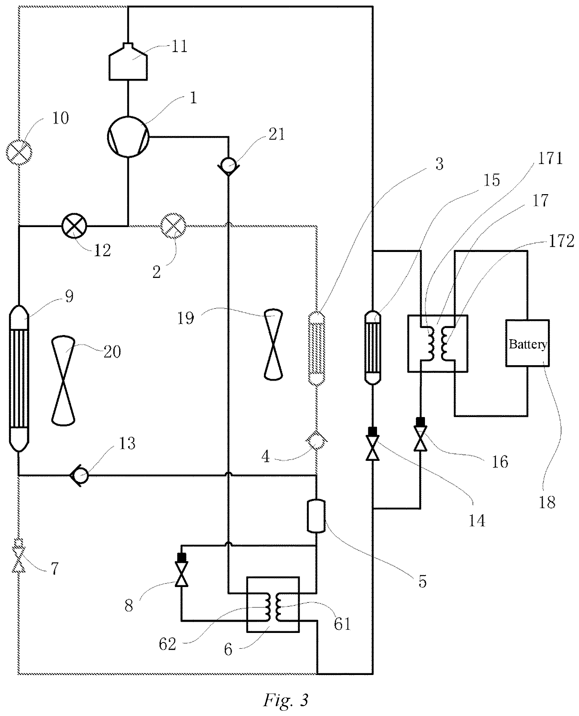

Fig. 3 shows the refrigeration circuit of the heat pump air-conditioning system of the invention when refrigerating the compartment of the electric vehicle.

As shown in Fig. 3, the refrigeration circuit of the invention mainly comprises the compressor 1, the second condenser 9, the first heat exchanger 6, a third expansion valve 14 and the evaporator 15 which are connected end to end in sequence. The first end of the first channel 61 of the first heat exchanger 6 is in communication with the second condenser 9, and the second end of the first channel 61 of the first heat exchanger 6 is in communication with the third expansion valve 14. The first end of the second channel 62 of the first heat exchanger 6 is in communication with the second condenser 9 through the second expansion valve 8, and the second end of the second channel 62 of the first heat exchanger 6 is in communication with the compressor 1.

With continued reference to Fig. 3, the first input end of the compressor 1 is in communication with the evaporator 15, the second input end of the compressor 1 is in communication with the second end of the second channel 62, and the output end is in communication with the second condenser 9.

The operating principle of the refrigeration circuit shown in Fig. 3 is as follows:
Main circuit: The compressor 1 compresses a low-temperature and low-pressure coolant into a high-temperature and high-pressure coolant. The high-temperature and high-pressure coolant transfers heat to the air in the ambient environment when passing through the second condenser 9 and thus becomes a low-temperature and high-pressure coolant. One part of the low-temperature and high-pressure coolant becomes a low-temperature and low-pressure coolant when passing through the third expansion valve 14 after passing through the first channel 61 of the first heat exchanger 6. The low-temperature and low-pressure coolant absorbs heat from the air in the compartment when passing through the evaporator 15 and thus becomes a high-temperature and low-pressure coolant. Finally, the high-temperature and low-pressure coolant becomes a high-temperature and high-pressure coolant again after passing through the compressor 1.

Enhanced vapor injection circuit: The other part of the low-temperature and high-pressure coolant flowing out of the second condenser 9 vaporizes (or expands) and absorbs heat when passing through the second expansion valve 8 and thus becomes a low-temperature and low-pressure coolant (the temperature of which is lower than that of the coolant in the first channel 61). The low-temperature and low-pressure coolant absorbs heat from the low-temperature and high-pressure coolant in the first channel 61 when passing through the second channel 62, and then returns to the compressor 1. In addition, since the ambient temperature would not be very low when the refrigeration circuit operates, those skilled in the art can also close the second expansion valve 8 so that the low-temperature and high-pressure coolant only passes through the first channel 61 of the first heat exchanger 6.

Since the ambient temperature might be relatively high when the enhanced vapor injection heat pump air-conditioning system of the invention refrigerates the compartment, and the operating temperature of the compressor 1 would not be too high, those skilled in the art can also close the second expansion valve 8 as required, even if the enhanced vapor injection circuit is not operating, so that the low-temperature and high-pressure coolant flowing out of the first condenser 3 all flows to the first channel 61 of the first heat exchanger 6.

During this process, the first fan 19 can continuously blow the cold air around the evaporator 15 into the compartment.

Those skilled in the art can understand that a lower coolant temperature in the first channel 61 can make the coolant temperature flowing through the second condenser 9 and the compressor 1 also lower. Therefore, the enhanced vapor injection circuit in the heat pump air-conditioning system of the invention can keep the operating temperature of the compressor 1 within a safe range.

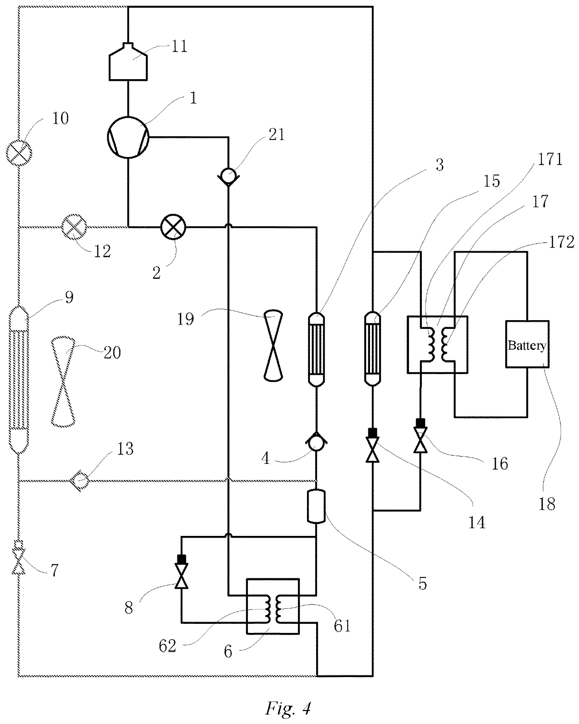

Fig. 4 shows the defogging circuit of the heat pump air-conditioning system of the invention when defogging the compartment of the electric vehicle.

As shown in Fig. 4, the defogging circuit of the invention mainly comprises the compressor 1, the first condenser 3, the first heat exchanger 6, the third expansion valve 14 and the evaporator 15 which are connected end to end in sequence. The first end of the first channel 61 of the first heat exchanger 6 is in communication with the first condenser 3, and the second end of the first channel 61 of the first heat exchanger 6 is in communication with the third expansion valve 14. The first end of the second channel 62 of the first heat exchanger 6 is in communication with the first condenser 3 through the second expansion valve 8, and the second end of the second channel 62 of the first heat exchanger 6 is in communication with the compressor 1.

With continued reference to Fig. 4, the first input end of the compressor 1 is in communication with the evaporator 15, the second input end of the compressor 1 is in communication with the second end of the second channel 62, and the output end is in communication with the first condenser 3.

The operating principle of the defogging circuit shown in Fig. 4 is as follows:
Main circuit: The compressor 1 compresses a low-temperature and low-pressure coolant into a high-temperature and high-pressure coolant. The high-temperature and high-pressure coolant transfers heat to the air in the interior of the vehicle when passing through the first condenser 3 and thus becomes a low-temperature and high-pressure coolant. One part of the low-temperature and high-pressure coolant becomes a low-temperature and low-pressure coolant when passing through the third expansion valve 14 after passing through the first channel 61 of the first heat exchanger 6. The low-temperature and low-pressure coolant absorbs heat from the air in the compartment when passing through the evaporator 15 and thus becomes a high-temperature and low-pressure coolant. Finally, the high-temperature and low-pressure coolant becomes a high-temperature and high-pressure coolant again after passing through the compressor 1.

Enhanced vapor injection circuit: The other part of the low-temperature and high-pressure coolant flowing out of the first condenser 3 vaporizes (or expands) and absorbs heat when passing through the second expansion valve 8 and thus becomes a low-temperature and low-pressure coolant (the temperature of which is lower than that of the coolant in the first channel 61). The low-temperature and low-pressure coolant absorbs heat from the low-temperature and high-pressure coolant in the first channel 61 when passing through the second channel 62, and then returns to the compressor 1. In addition, since the ambient temperature would not be very low when the refrigeration circuit operates, those skilled in the art can also close the second expansion valve 8 so that the low-temperature and high-pressure coolant only passes through the first channel 61 of the first heat exchanger 6.

Since the ambient temperature might be relatively high when the enhanced vapor injection heat pump air-conditioning system of the invention defogs the compartment, and the operating temperature of the compressor 1 would not be too high, those skilled in the art can also close the second expansion valve 8 as required, even if the enhanced vapor injection circuit is not operating, so that the low-temperature and high-pressure coolant flowing out of the first condenser 3 all flows to the first channel 61 of the first heat exchanger 6.

In this process, the hot air around the first condenser 3 and/or the cold air around the evaporator 15 can be continuously blown into the compartment by the first fan 19.

Preferably, in a preferred embodiment of the invention, the electric vehicle of the invention has a first shielding member that shields the first condenser 3 and a second shielding member that shields the evaporator 15. By adjusting the first shielding member and the second shielding member, the contact area between the airflow blown by the first fan 19 and the first condenser 3 and the evaporator 15 can be varied, and thus the temperature of the airflow blown into the compartment by the first fan 19 can be adjusted. When the airflow is adjusted to an appropriate temperature, the glass (especially the front windshield) of the electric vehicle can be defogged.

As shown in Figs. 3 and 4, the heat pump air-conditioning system of the invention further comprises a second heat exchanger 17. The second heat exchanger 17 comprises a third channel 171 and a fourth channel 172. A first end of the third channel 171 (the lower end of the third channel 171 in Fig. 3) is in communication with the first channel 61 of the first heat exchanger 6 through a fourth expansion valve 16, and a second end of the third channel 171 (the upper end of the third channel 171 in Fig. 3) is in communication with the compressor 1. Two ends of the fourth channel 172 are in communication with a battery 18 (a traction battery) of the electric vehicle. Alternatively, those skilled in the art can also connect both ends of the fourth channel 172 to other heat sources of the electric vehicle, such as a drive motor, as required.

With continued reference to Figs. 3 and 4, the heat pump air-conditioning system of the invention can optionally open the fourth expansion valve 16 to cool the battery 18 of the electric vehicle when cooling and defogging the compartment.

Specifically, the low-temperature and high-pressure coolant flowing out of the first channel 61 of the first heat exchanger 6 becomes a low-temperature and low-pressure coolant when passing through the fourth expansion valve 16. The low-temperature and low-pressure coolant absorbs heat from the cooling medium circulating in the fourth channel 172 when passing through the third channel 171 of the second heat exchanger 17 and thus becomes a high-temperature and low-pressure coolant. Finally, the high-temperature and low-pressure coolant becomes a high-temperature and high-pressure coolant again after passing through the compressor 1.

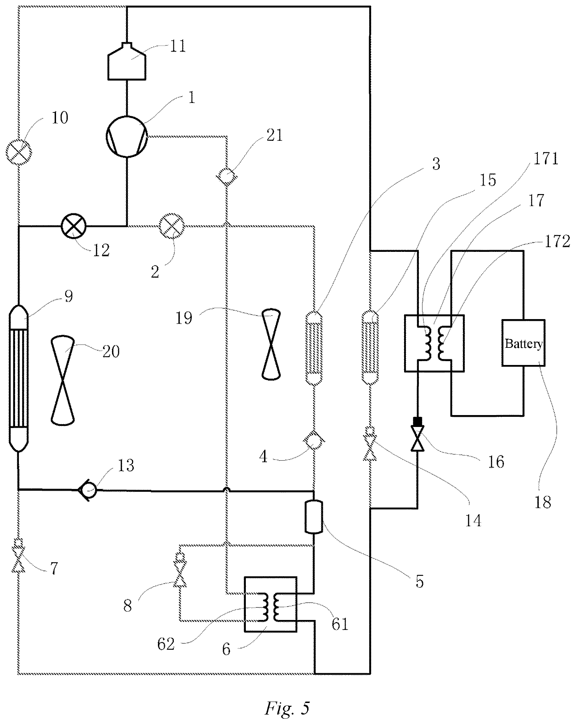

Fig. 5 shows the defrosting circuit of the heat pump air-conditioning system of the invention when defrosting the second condenser 9 outside the vehicle.

As shown in Fig. 5, the defrosting circuit of the invention mainly comprises the compressor 1, the second condenser 9, the first heat exchanger 6, the fourth expansion valve 16 and the second heat exchanger 17 which are connected end to end in sequence. The first end of the first channel 61 of the first heat exchanger 6 is in communication with the second condenser 9, and the second end of the first channel 61 of the first heat exchanger 6 is in communication with the fourth expansion valve 16. The first end of the second channel 62 of the first heat exchanger 6 is in communication with the second condenser 9 through the second expansion valve 8, and the second end of the second channel 62 of the first heat exchanger 6 is in communication with the compressor 1.

With continued reference to Fig. 5, the first input end of the compressor 1 is in communication with the second heat exchanger 17, the second input end of the compressor 1 is in communication with the second end of the second channel 62, and the output end is in communication with the second condenser 9.

The operating principle of the defrosting circuit shown in Fig. 5 is as follows:
Main circuit: The compressor 1 compresses a low-temperature and low-pressure coolant into a high-temperature and high-pressure coolant. The high-temperature and high-pressure coolant dissipates heat when passing through the second condenser 9 and thus becomes a low-temperature and high-pressure coolant. All of the low-temperature and high-pressure coolant passes through the first channel 61 of the first heat exchanger 6 and then becomes a low-temperature and low-pressure coolant when passing through the fourth expansion valve 16. The low-temperature and low-pressure coolant absorbs heat from the cooling medium in the fourth channel 172 when passing through the third channel 171 of the second heat exchanger 17 and thus becomes a high-temperature and low-pressure coolant. Finally, the high-temperature and low-pressure coolant becomes a high-temperature and high-pressure coolant again after passing through the compressor 1.

Enhanced vapor injection circuit: At this time, the second expansion valve 8 is closed, the enhanced vapor injection circuit does not operate, and there is no coolant flowing to the second channel 62 of the first heat exchanger 6.

In this process, the second fan 20 may not operate, so that the high-temperature and high-pressure coolant passing through the second condenser 9 can transfer heat to frost outside the second condenser 9 as much as possible, thereby promoting the melting of the frost.

It should be noted that during this process, the heat of the cooling medium in the fourth channel 172 of the second heat exchanger 17 is provided by the operating battery 18.

Further, as shown in Figs. 1 to 5, the heat pump air-conditioning system of the invention further comprises a first shutoff valve 2, a second shutoff valve 10 and a third shutoff valve 12. By controlling the opening and closing of the first shutoff valve 2, the second shutoff valve 10 and the third shutoff valve 12 as shown in Figs. 2 to 5, the heat pump air-conditioning system of the invention can be freely switched among the heating circuit, the refrigeration circuit, the defogging circuit and the defrosting circuit. In a preferred embodiment of the invention, the first shutoff valve 2, the second shutoff valve 10 and the third shutoff valve 12 are all electrically controlled shutoff valves, so that a controller of the electric vehicle can freely switch the heat pump air-conditioning system among the heating circuit, the refrigeration circuit, the defogging circuit and the defrosting circuit by controlling the opening and closing of the three electrically controlled shutoff valves. In addition, the first shutoff valve 2, the second shutoff valve 10 and the third shutoff valve 12 of the invention are not limited to the only one positional connection relationship shown in Figs. 1 to 5. Those skilled in the art may also appropriately adjust the positions of the first shutoff valve 2, the second shutoff valve 10 and the third shutoff valve 12 according to requirements, for example, disposing the first shutoff valve 2 between the first condenser 3 and the first heat exchanger 6.

Further, those skilled in the art can also set the first shutoff valve 2 and the third shutoff valve 12 as a two-position and three-way reversing valve as required, so that the coolant flowing out of the compressor 1 can selectively flow to the first condenser 3 or the second condenser 9 by switching the two-position and three-way reversing valve. The second shutoff valve 10 and the third shutoff valve 12 can be set as a three-position and three-way reversing valve, so that the second condenser 9 can be selectively in communication with the first input end or the output end of the compressor 1 by switching the three-position and three-way reversing valve, and the second condenser 9 can be disconnected from the compressor 1.

Still further, the heat pump air-conditioning system of the invention further comprises a first check valve 4, a second check valve 13 and a third check valve 21. The first check valve 3 is provided at the lower side of the first condenser 3 shown in Figs. 1 to 5. The second check valve 13 is provided between the first condenser 3 and the second condenser 9 shown in Figs. 1 to 5. The third check valve 21 is provided between the first heat exchanger 6 and the compressor 1 shown in Figs. 1 to 5. The first check valve 4, the second check valve 13 and the third check valve 21 only allow coolant to flow in one direction but not in the reverse direction. Therefore, the first check valve 4 and the second check valve 13 cooperate with the first shutoff valve 2, the second shutoff valve 10 and the third shutoff valve 12 to simplify the heat pump air-conditioning system and reduce the number of shutoff valves required. The third check valve 21 can prevent the coolant in the compressor 1 from flowing back to the first heat exchanger 6 when the second expansion valve 8 is closed.

In addition, those skilled in the art can also omit the first check valve 4 and the second check valve 13 as required, and add corresponding shutoff valves in the heat pump air-conditioning system, so that the heat pump air-conditioning system of the invention can freely switch among the four circuits of the heating circuit, the refrigeration circuit, the defogging circuit and the defrosting circuit. Alternatively, those skilled in the art can also omit the first shutoff valve 2, the second shutoff valve 10, the third shutoff valve 12, and optionally the first check valve 4 and the second check valve 13 as required, and configure a first control valve, a second control valve, a third control valve, and a fourth control valve for the heating circuit, the refrigeration circuit, the defogging circuit and the defrosting circuit, respectively, to control the on/off of the heating circuit, the refrigeration circuit, and the defogging circuit, respectively. The heat pump air-conditioning system of the invention can be freely switched among the four circuits of the heating circuit, the refrigeration circuit, the defogging circuit and the defrosting circuit by controlling the on/off of the first control valve, the second control valve, the third control valve and the fourth control valve.

It should be noted that in a preferred embodiment of the invention, the first expansion valve 7, the second expansion valve 8, the third expansion valve 14 and the fourth expansion valve 16 are all electronic expansion valves, so that the controller of the electric vehicle can automatically adjust the flow rate of coolant in the heat pump air-conditioning system by controlling the four electronic expansion valves, thereby being able to adjust the temperature in the compartment, effectively defog inside the compartment (especially the front windshield of the vehicle) and effectively defrost the second condenser 9 located outside the vehicle.

It should be added that the heat pump air-conditioning system of the invention further comprises a liquid storage and drying bottle 5 and a gas-liquid separator 11. The liquid storage and drying bottle 5 is arranged at an inlet end of the first heat exchanger 6 for removing moisture from the coolant and storing extra coolant from the circuits. The gas-liquid separator 11 is in communication with the first input end of the compressor 1 and is used for separating gas and liquid, preventing liquid refrigerant from entering the compressor 1 and improving the oil return capability of the system.

In addition, those skilled in the art can also set a two-position and three-way valve at an output end of the liquid storage drying bottle 5 as required, so that an input end of the two-position and three-way valve is in communication with the output end of the liquid storage and drying bottle 5, a first output end of the two-position and three-way valve is in communication with an input end of the first heat exchanger 6 (input ends of the first channel 61 and the second channel 62), and a second output end of the two-position and three-way valve is in communication with the third expansion valve 14 and the fourth expansion valve 16, so as to allow coolant to flow directly to the third expansion valve 14 and/or the fourth expansion valve 16 when the first heat exchanger 6 is not required to operate.

In summary, the enhanced vapor injection heat pump air-conditioning system of the invention can ensure that the compressor 1 will not overheat and thus stop operation due to the increasing compression ratio even when the ambient temperature is very low (for example, above -20°C). Therefore, the enhanced vapor injection heat pump air-conditioning system of the invention can heat the compartment of the electric vehicle even when the ambient temperature is low. Compared with the traditional electric heating method, the phase change heating method of the invention reduces the waste of electric energy of the electric vehicle and improves the range of the electric vehicle.

Those skilled in the art can understand that the coolant of the invention can be any feasible coolant, for example, inorganic compound refrigerant, freon, saturated hydrocarbon refrigerant, unsaturated hydrocarbon refrigerant, azeotropic mixture refrigerant, etc.

Heretofore, the technical solutions of the invention have been described with reference to the preferred embodiments shown in the accompanying drawings; however, those skilled in the art can readily understand that the scope of protection of the invention is obviously not limited to these particular embodiments.

## Claims

1. An enhanced vapor injection heat pump air-conditioning system comprising a heating circuit that comprises a compressor (1), a first condenser (3), a first heat exchanger (6), a first expansion valve (7) and a second condenser (9) which are connected end to end in sequence;
wherein the first heat exchanger (6) comprises a first channel (61) and a second channel (62),
a first end of the first channel (61) is in communication with the first condenser (3), and a second end of the first channel (62) is in communication with the first expansion valve (7); and
a first end of the second channel (62) is in communication with the first condenser (3) through a second expansion valve (8), and a second end of the second channel (62) is in communication with an inlet of the compressor (1),
**characterized in that** in the heating circuit, one part of low-temperature and high-pressure coolant flowing out of the first condenser (3) passes through the first channel (61) of the first heat exchanger (6), and the other part of the low-temperature and high-pressure coolant flowing out of the first condenser (3) expands and absorbs heat when passing through the second expansion valve (8) and becomes a low-temperature and low-pressure coolant which directly flows into the second channel (62) to absorb heat from the low-temperature and high-pressure coolant in the first channel (61).

2. The enhanced vapor injection heat pump air-conditioning system according to claim 1, **characterized in that** the heating circuit further comprises a first shutoff valve (2) and a second shutoff valve (10), wherein the first shutoff valve (2) is connected between an outlet of the compressor (1) and the first condenser (3), and the second shutoff valve (10) is connected between the inlet of the compressor (1) and the second condenser (9).

3. The enhanced vapor injection heat pump air-conditioning system according to claim 1, **characterized by** further comprising a refrigeration circuit,
the refrigeration circuit comprising the compressor (1), the second condenser (9), a third expansion valve (14) and an evaporator (15) which are connected end to end in sequence.

4. The enhanced vapor injection heat pump air-conditioning system according to claim 3, **characterized in that** the refrigeration circuit further comprises the first heat exchanger (6);
the first end of the first channel (61) is in communication with the second condenser (9), and the second end of the first channel is in communication with the third expansion valve (14); and
the first end of the second channel (62) is in communication with the second condenser (9) through the second expansion valve (8), and the second end of the second channel (62) is in communication with the inlet of the compressor (1).

5. The enhanced vapor injection heat pump air-conditioning system according to claim 4, **characterized in that** the refrigeration circuit further comprises a third shutoff valve (12) connected between an outlet of the compressor (1) and the second condenser (9).

6. The enhanced vapor injection heat pump air-conditioning system according to claim 3, **characterized by** further comprising a defogging circuit,
the defogging circuit comprising the compressor (1), the first condenser (3), the third expansion valve (14) and the evaporator (15) which are connected end to end in sequence.

7. The enhanced vapor injection heat pump air-conditioning system according to claim 6, **characterized in that** the defogging circuit further comprises the first heat exchanger (6);
the first end of the first channel (61) is in communication with the first condenser (3), and the second end of the first channel (61) is in communication with the third expansion valve (14); and
the first end of the second channel (62) is in communication with the first condenser (3) through the second expansion valve (8), and the second end of the second channel (62) is in communication with the inlet of the compressor (1).

8. The enhanced vapor injection heat pump air-conditioning system according to claim 1, **characterized by** further comprising a defrosting circuit,
the defrosting circuit comprising the compressor (1), the second condenser (9), a fourth expansion valve (16) and a second heat exchanger (17) which are connected end to end in sequence;
the second heat exchanger (17) comprising a third channel (171) and a fourth channel (172),
a first end of the third channel (171) being in communication with the fourth expansion valve (16), and a second end of the third channel (171) being in communication with the inlet of the compressor (1); and
two ends of the fourth channel (172) being respectively in communication with a heat source (18).

9. The enhanced vapor injection heat pump air-conditioning system according to claim 8, **characterized in that** the defrosting circuit further comprises the first heat exchanger (6);
the first end of the first channel (61) is in communication with the second condenser (9), and the second end of the first channel (61) is in communication with the fourth expansion valve (16); and
the first end of the second channel (62) is in communication with the second condenser (9) through the second expansion valve (8), and the second end of the second channel (62) is in communication with the inlet of the compressor (1);
wherein the second expansion valve (8) is in a closed state.

10. The enhanced vapor injection heat pump air-conditioning system according to any one of claims 3 to 7, **characterized by** further comprising a first fan (19) for providing airflow for the first condenser (3) and/or the evaporator (15).

11. The enhanced vapor injection heat pump air-conditioning system according to any one of claims 1 to 9, **characterized by** further comprising a second fan (20) for providing airflow for the second condenser (9).

12. An electric vehicle, **characterized by** comprising an enhanced vapor injection heat pump air-conditioning system according to any one of claims 1 to 11.

13. The electric vehicle according to claim 12 referring to claim 10, **characterized in that** the first fan (19) blows the airflow to the interior of the vehicle.

14. The electric vehicle according to claim 12 referring to claim 11, **characterized in that** the second fan (20) blows the airflow out of the vehicle.

15. The electric vehicle according to claim 11 referring to claim 8, **characterized in that** the heat source (18) includes at least one of a battery (18) and an electric motor.

## Patentansprüche

1. Wärmepumpen-Klimaanlage mit verbesserter Dampfinjektion, aufweisend einen Heizkreislauf, der einen Kompressor (1), einen ersten Kondensator (3), einen ersten Wärmetauscher (6), ein erstes Expansionsventil (7) und einen zweiten Kondensator (9) aufweist, die der Reihe nach miteinander verbunden sind;
wobei der erste Wärmetauscher (6) einen ersten Kanal (61) und einen zweiten Kanal (62) aufweist,
ein erstes Ende des ersten Kanals (61) in Verbindung mit dem ersten Kondensator (3) steht und ein zweites Ende des ersten Kanals (62) in Verbindung mit dem ersten Expansionsventil (7) steht; und
ein erstes Ende des zweiten Kanals (62) über ein zweites Expansionsventil (8) mit dem ersten Kondensator (3) in Verbindung steht und ein zweites Ende des zweiten Kanals (62) mit einem Einlass des Kompressors (1) in Verbindung steht,
**dadurch gekennzeichnet, dass** im Heizkreislauf ein Teil eines Niedertemperatur- und Hochdruckkühlmittels, das aus dem ersten Kondensator (3) fließt, durch den ersten Kanal (61) des ersten Wärmetauschers (6) fließt, und der andere Teil des Niedertemperatur- und Hochdruckkühlmittels, das aus dem ersten Kondensator (3) fließt, sich ausdehnt und Wärme absorbiert, wenn es durch das zweite Expansionsventil (8) fließt, und zu einem Niedertemperatur- und Niederdruckkühlmittel wird, das direkt in den zweiten Kanal (62) zum Aufnehmen von Wärme vom Niedertemperatur- und Hochdruckkühlmittel im ersten Kanal (61) fließt.

2. Wärmepumpen-Klimaanlage mit verbesserter Dampfinjektion nach Anspruch 1, **dadurch gekennzeichnet, dass** der Heizkreislauf ferner ein erstes Absperrventil (2) und ein zweites Absperrventil (10) aufweist, wobei das erste Absperrventil (2) zwischen einem Auslass des Kompressors (1) und dem ersten Kondensator (3) verbunden ist und das zweite Absperrventil (10) zwischen dem Einlass des Kompressors (1) und dem zweiten Kondensator (9) verbunden ist.

3. Wärmepumpen-Klimaanlage mit verbesserter Dampfinjektion nach Anspruch 1, **dadurch gekennzeichnet, dass** sie ferner einen Kältekreislauf aufweist,
wobei der Kältekreislauf den Kompressor (1), den zweiten Kondensator (9), ein drittes Expansionsventil (14) und einen Verdampfer (15) aufweist, die der Reihe nach miteinander verbunden sind.

4. Wärmepumpen-Klimaanlage mit verbesserter Dampfinjektion nach Anspruch 3, **dadurch gekennzeichnet, dass** der Kältekreislauf ferner den ersten Wärmetauscher (6) aufweist;
das erste Ende des ersten Kanals (61) mit dem zweiten Kondensator (9) in Verbindung steht und das zweite Ende des ersten Kanals mit dem dritten Expansionsventil (14) in Verbindung steht; und
das erste Ende des zweiten Kanals (62) über das zweite Expansionsventil (8) mit dem zweiten Kondensator (9) in Verbindung steht, und das zweite Ende des zweiten Kanals (62) mit dem Einlass des Kompressors (1) in Verbindung steht.

5. Wärmepumpen-Klimaanlage mit verbesserter Dampfinjektion nach Anspruch 4, **dadurch gekennzeichnet, dass** der Kältekreislauf ferner ein drittes Absperrventil (12) aufweist, das zwischen einem Auslass des Kompressors (1) und dem zweiten Kondensator (9) verbunden ist.

6. Wärmepumpen-Klimaanlage mit verbesserter Dampfinjektion nach Anspruch 3, **dadurch gekennzeichnet, dass** sie ferner einen Entfeuchtungskreislauf aufweist,
wobei der Entfeuchtungskreislauf den Kompressor (1), den ersten Kondensator (3), das dritte Expansionsventil (14) und den Verdampfer (15) aufweist, die der Reihe nach miteinander verbunden sind.

7. Wärmepumpen-Klimaanlage mit verbesserter Dampfinjektion nach Anspruch 6, **dadurch gekennzeichnet, dass** der Entfeuchtungskreislauf ferner den ersten Wärmetauscher (6) aufweist;
das erste Ende des ersten Kanals (61) in Verbindung mit dem ersten Kondensator (3) steht und das zweite Ende des ersten Kanals (61) in Verbindung mit dem dritten Expansionsventil (14) steht; und
das erste Ende des zweiten Kanals (62) über das zweite Expansionsventil (8) mit dem ersten Kondensator (3) in Verbindung steht, und das zweite Ende des zweiten Kanals (62) mit dem Einlass des Kompressors (1) in Verbindung steht.

8. Wärmepumpen-Klimaanlage mit verbesserter Dampfinjektion nach Anspruch 1, **dadurch gekennzeichnet, dass** sie ferner einen Abtaukreislauf aufweist,
der Abtaukreislauf den Kompressor (1), den zweiten Kondensator (9), ein viertes Expansionsventil (16) und einen zweiten Wärmetauscher (17) aufweist, die der Reihe nach miteinander verbunden sind;
der zweite Wärmetauscher (17) einen dritten Kanal (171) und einen vierten Kanal (172) aufweist,
ein erstes Ende des dritten Kanals (171) in Verbindung mit dem vierten Expansionsventil (16) steht und ein zweites Ende des dritten Kanals (171) in Verbindung mit dem Einlass des Kompressors (1) steht; und
zwei Enden des vierten Kanals (172) jeweils mit einer Wärmequelle (18) in Verbindung stehen.

9. Wärmepumpen-Klimaanlage mit verbesserter Dampfinjektion nach Anspruch 8, **dadurch gekennzeichnet, dass** der Abtaukreislauf ferner den ersten Wärmetauscher (6) aufweist;
das erste Ende des ersten Kanals (61) mit dem zweiten Kondensator (9) in Verbindung steht und das zweite Ende des ersten Kanals (61) mit dem vierten Expansionsventil (16) in Verbindung steht; und
das erste Ende des zweiten Kanals (62) über das zweite Expansionsventil (8) mit dem zweiten Kondensator (9) in Verbindung steht, und das zweite Ende des zweiten Kanals (62) mit dem Einlass des Kompressors (1) in Verbindung steht;
wobei sich das zweite Expansionsventil (8) in einem geschlossenen Zustand befindet.

10. Wärmepumpen-Klimaanlage mit verbesserter Dampfinjektion nach einem der Ansprüche 3 bis 7, **dadurch gekennzeichnet, dass** sie ferner ein erstes Gebläse (19) zum Bereitstellen eines Luftstroms für den ersten Kondensator (3) und/oder den Verdampfer (15) aufweist.

11. Wärmepumpen-Klimaanlage mit verbesserter Dampfinjektion nach einem der Ansprüche 1 bis 9, **dadurch gekennzeichnet, dass** sie ferner ein zweites Gebläse (20) zum Bereitstellen eines Luftstroms für den zweiten Kondensator (9) aufweist.

12. Elektrofahrzeug, **dadurch gekennzeichnet, dass** es eine Wärmepumpen-Klimaanlage mit verbesserter Dampfinjektion nach einem der Ansprüche 1 bis 11 aufweist.

13. Elektrofahrzeug nach Anspruch 12 mit Bezug auf Anspruch 10, **dadurch gekennzeichnet, dass** das erste Gebläse (19) den Luftstrom in den Innenraum des Fahrzeugs bläst.

14. Elektrofahrzeug nach Anspruch 12 mit Bezug auf Anspruch 11, **dadurch gekennzeichnet, dass** das zweite Gebläse (20) den Luftstrom aus dem Fahrzeug herausbläst.

15. Elektrofahrzeug nach Anspruch 11 mit Bezug auf Anspruch 8, **dadurch gekennzeichnet, dass** die Wärmequelle (18) mindestens eines von einer Batterie (18) und einem Elektromotor beinhaltet.

## Revendications

1. Système de climatisation à pompe à chaleur à injection de vapeur améliorée, comprenant un circuit de chauffage qui comprend un compresseur (1), un premier condenseur (3), un premier échangeur de chaleur (6), une première soupape de détente (7) et un second condenseur (9) qui sont raccordés bout à bout en séquence ;
dans lequel le premier échangeur de chaleur (6) comprend un premier canal (61) et un deuxième canal (62),
une première extrémité du premier canal (61) est en communication avec le premier condenseur (3), et une seconde extrémité du premier canal (62) est en communication avec la première soupape de détente (7) ; et
une première extrémité du deuxième canal (62) est en communication avec le premier condenseur (3) par le biais d'une deuxième soupape de détente (8), et une seconde extrémité du deuxième canal (62) est en communication avec une entrée du compresseur (1),
**caractérisé en ce que**, dans le circuit de chauffage, une partie d'un liquide de refroidissement à basse température et à haute pression s'écoulant hors du premier condenseur (3) passe à travers le premier canal (61) du premier échangeur de chaleur (6), et l'autre partie du liquide de refroidissement à basse température et à haute pression s'écoulant hors du premier condenseur (3) se dilate et absorbe de la chaleur lors du passage à travers la deuxième soupape de détente (8) et devient un liquide de refroidissement à basse température et à basse pression qui s'écoule directement dans le deuxième canal (62) pour absorber de la chaleur à partir du liquide de refroidissement à basse température et à haute pression dans le premier canal (61).

2. Système de climatisation à pompe à chaleur à injection de vapeur améliorée selon la revendication 1, **caractérisé en ce que** le circuit de chauffage comprend en outre une première soupape d'arrêt (2) et une deuxième soupape d'arrêt (10), dans lequel la première soupape d'arrêt (2) est raccordée entre une sortie du compresseur (1) et le premier condenseur (3), et la deuxième soupape d'arrêt (10) est raccordée entre l'entrée du compresseur (1) et le second condenseur (9).

3. Système de climatisation à pompe à chaleur à injection de vapeur améliorée selon la revendication 1, **caractérisé en ce qu'**il comprend en outre un circuit de réfrigération,
le circuit de réfrigération comprenant le compresseur (1), le second condenseur (9), une troisième soupape de détente (14) et un évaporateur (15) qui sont raccordés bout à bout en séquence.

4. Système de climatisation à pompe à chaleur à injection de vapeur améliorée selon la revendication 3, **caractérisé en ce que** le circuit de réfrigération comprend en outre le premier échangeur de chaleur (6) ;
la première extrémité du premier canal (61) est en communication avec le second condenseur (9), et la seconde extrémité du premier canal est en communication avec la troisième soupape de détente (14) ; et
la première extrémité du deuxième canal (62) est en communication avec le second condenseur (9) par le biais de la deuxième soupape de détente (8), et la seconde extrémité du deuxième canal (62) est en communication avec l'entrée du compresseur (1).

5. Système de climatisation à pompe à chaleur à injection de vapeur améliorée selon la revendication 4, **caractérisé en ce que** le circuit de réfrigération comprend en outre une troisième soupape d'arrêt (12) raccordée entre une sortie du compresseur (1) et le second condenseur (9).

6. Système de climatisation à pompe à chaleur à injection de vapeur améliorée selon la revendication 3, **caractérisé en ce qu'**il comprend en outre un circuit de désembuage,
le circuit de désembuage comprenant le compresseur (1), le premier condenseur (3), la troisième soupape de détente (14) et l'évaporateur (15) qui sont raccordés bout à bout en séquence.

7. Système de climatisation à pompe à chaleur à injection de vapeur améliorée selon la revendication 6, **caractérisé en ce que** le circuit de désembuage comprend en outre le premier échangeur de chaleur (6) ;
la première extrémité du premier canal (61) est en communication avec le premier condenseur (3), et la seconde extrémité du premier canal (61) est en communication avec la troisième soupape de détente (14) ; et
la première extrémité du deuxième canal (62) est en communication avec le premier condenseur (3) par le biais de la deuxième soupape de détente (8), et la seconde extrémité du deuxième canal (62) est en communication avec l'entrée du compresseur (1).

8. Système de climatisation à pompe à chaleur à injection de vapeur améliorée selon la revendication 1, **caractérisé en ce qu'**il comprend en outre un circuit de dégivrage,
le circuit de dégivrage comprenant le compresseur (1), le second condenseur (9), une quatrième soupape de détente (16) et un second échangeur de chaleur (17) qui sont raccordés bout à bout en séquence ;
le second échangeur de chaleur (17) comprenant un troisième canal (171) et un quatrième canal (172),
une première extrémité du troisième canal (171) étant en communication avec la quatrième soupape de détente (16), et une seconde extrémité du troisième canal (171) étant en communication avec l'entrée du compresseur (1) ; et
deux extrémités du quatrième canal (172) étant respectivement en communication avec une source de chaleur (18).

9. Système de climatisation à pompe à chaleur à injection de vapeur améliorée selon la revendication 8, **caractérisé en ce que** le circuit de dégivrage comprend en outre le premier échangeur de chaleur (6) ;
la première extrémité du premier canal (61) est en communication avec le second condenseur (9), et la seconde extrémité du premier canal (61) est en communication avec la quatrième soupape de détente (16) ; et
la première extrémité du deuxième canal (62) est en communication avec le second condenseur (9) par le biais de la deuxième soupape de détente (8), et la seconde extrémité du deuxième canal (62) est en communication avec l'entrée du compresseur (1) ;
dans lequel la deuxième soupape de détente (8) est dans un état fermé.

10. Système de climatisation à pompe à chaleur à injection de vapeur améliorée selon l'une quelconque des revendications 3 à 7, **caractérisé en ce qu'**il comprend en outre un premier ventilateur (19) destiné à fournir un écoulement d'air pour le premier condenseur (3) et/ou l'évaporateur (15).

11. Système de climatisation à pompe à chaleur à injection de vapeur améliorée selon l'une quelconque des revendications 1 à 9, **caractérisé en ce qu'**il comprend en outre un second ventilateur (20) destiné à fournir un écoulement d'air pour le second condenseur (9).

12. Véhicule électrique, **caractérisé en ce qu'**il comprend un système de climatisation à pompe à chaleur à injection de vapeur améliorée selon l'une quelconque des revendications 1 à 11.

13. Véhicule électrique selon la revendication 12 lorsqu'elle fait référence à la revendication 10, **caractérisé en ce que** le premier ventilateur (19) souffle l'écoulement d'air vers l'intérieur du véhicule.

14. Véhicule électrique selon la revendication 12 lorsqu'elle fait référence à la revendication 11, **caractérisé en ce que** le second ventilateur (20) souffle l'écoulement d'air hors du véhicule.

15. Véhicule électrique selon la revendication 11 lorsqu'elle fait référence à la revendication 8, **caractérisé en ce que** la source de chaleur (18) inclut au moins un d'une batterie (18) et d'un moteur électrique.
